# EUROPEAN PATENT APPLICATION

(11) **EP 4 647 387 A1**
(43) Date of publication of application: **12.11.2025**
(21) Application number: 23914478.5
(22) Date of filing: 14.12.2023
(51) Int. Cl.: B66C 13/48

(54) **HYBRID-POWER CONTROL METHOD AND SYSTEM, AND CRANE**

(30) Priority: 04.01.2023 CN 202310006408
(71) Applicant: Xuzhou Heavy Machinery Co., Ltd., Xuzhou, Jiangsu 221004 (CN)
(72) Inventor: DING, Honggang, Xuzhou, Jiangsu 221004 (CN); LIU, Jianli, Xuzhou, Jiangsu 221004 (CN); ZHAO, Jianguo, Xuzhou, Jiangsu 221004 (CN); SUN, Wenzan, Xuzhou, Jiangsu 221004 (CN); JIAO, Jingqiong, Xuzhou, Jiangsu 221004 (CN); MA, Zhi, Xuzhou, Jiangsu 221004 (CN)
(74) Representative: Murgitroyd & Company
(86) International application number: PCT/CN2023/138608
(87) International publication number: WO 2024/146344

(57) **Abstract**

The present invention relates to a hybrid-power control method and system, and a crane. The control method comprises: reading an opening-degree signal of an operation handle, and calculating the displacement of an oil pump, which displacement is required by an operation; reading information of a pressure sensor at an oil outlet of the oil pump to obtain the pressure of a hydraulic system, and by means of the displacement of the oil pump, calculating a torque required by the operation of a crane; reading an opening-degree signal of an accelerator, and calculating a rotation speed required by the operation, so as to obtain a target rotation speed of an engine and a target rotation speed of an electric motor; reading information of the electric quantity and charging and discharging operation power of a power battery, and outputting charging and discharging power requirements of the power battery according to electric balance requirements of a vehicle; and by means of integrating the information, calculating an optimal torque actually emitted by the engine, and adjusting the engine to operate within an optimal economic interval. The hybrid-power control method and system, and the crane of the present invention can effectively improve the operation stability and economical efficiency of a hybrid power system. Products that balance stability, economical efficiency and environmental protection requirements can be created for crane users.

## Description

### TECHNICAL FIELD

The present disclosure belongs to the technical field of hybrid-power control, and particularly relates to a hybrid-power control method and system, and a crane.

### BACKGROUND

Cranes have been widely applied to factories, mines, ports, hydropower stations, buildings, bridges, and other fields. Traditional wheeled cranes are generally power-driven by diesel engines and applied in a mature manner, but have the disadvantages of severe pollution and non-compliance with emission standards. As China proposes the national goals of achieving carbon peak and carbon neutrality, higher requirements for carbon emissions in the crane industry have been put forward. Energy conservation and environmental protection have become one of the current dominant trends in the development of the crane industry. In recent years, many types of hybrid cranes have emerged on the market, but are mainly driven by engines and electric motors alone during operations, and are rarely driven in a hybrid manner. A torque and rotation speed required for operation of a crane vary significantly. In order to ensure that an engine operates within an optimal economic interval, an electric motor needs to continuously adjust its output torque according to an output torque and rotation speed of the engine. However, due to a slow response speed of the engine, substantial load variations, and other reasons, the output torque of the electric motor fluctuates significantly, which easily causes lifting vibrations of the crane. Therefore, when the crane operates in a hybrid power-driven manner, the electric motor is typically in a power generation mode, thereby making it difficult to adjust the output torque of the engine under all operating conditions. Hybrid-power control methods in the prior art are mostly tailored for commercial vehicles. A driving resistance of a commercial vehicle is related to a slope, wind resistance, and rolling resistance. The resistance typically does not change abruptly. When the electric motor adjusts the output torque of the engine according to the required torque of a vehicle, the torque does not fluctuate significantly, such that the vehicle is driven in a relatively smooth manner. However, when the crane is operating, the required torque is related to a lifting weight and an opening degree of a handle, and the required torque fluctuates significantly. A traditional hybrid-power control method does not meet the hybrid-power control requirements for the operating conditions of the crane, thereby affecting the normal operation of the crane and shortening the service life of a battery pack. Therefore, those skilled in the art are in an urgent need to provide a hybrid-power control method suitable for the operating conditions of the crane so as to solve the technical problem.

### SUMMARY

Invention objective: in view of the deficiencies in the prior art, an objective of the present disclosure is to provide a hybrid-power control method and system, and a crane, so as to improve the operation stability and economical efficiency of a hybrid power system.

Technical solution: the hybrid-power control method the present disclosure includes the following steps:
(1) reading an opening-degree signal of an operation handle through a vehicle body controller, calculating a displacement of an oil pump required by an operation, and sending a control signal to the oil pump, wherein the oil pump operates with the corresponding displacement;
(2) reading information of a pressure sensor at an oil outlet of the oil pump through the vehicle body controller to obtain a pressure of a hydraulic system, and by means of the displacement of the oil pump, calculating a torque required by an operation of a crane;
(3) reading an opening-degree signal of an accelerator through the vehicle body controller, and calculating a rotation speed required by the operation, so as to obtain a target rotation speed of an engine and a target rotation speed of an electric motor; controlling the electric motor to output the target rotation speed through an electric motor controller;
(4) reading information of an electric quantity and charging and discharging operation power of a power battery through the vehicle body controller, and outputting charging and discharging power requirements of the power battery according to electric balance requirements of a vehicle; and
(5) by means of integrating the torque required by the operation of the crane, the target rotation speed of the engine and the target rotation speed of the electric motor, and the charging and discharging power required of the power battery, calculating an optimal torque actually output by the engine, and adjusting the engine to operate within an optimal economic interval.

Further, the oil pump and the engine are mechanically coupled to the electric motor, and the engine and the oil pump maintain a same rotation speed or a fixedly proportional rotation speed relative to the electric motor.

Further, when a torque output by the engine is greater than the torque required for the operation, the electric motor outputs a negative torque to charge the power battery.

Further, when the torque output by the engine is less than the torque required for the operation, the electric motor outputs a positive torque to discharge the power battery.

Further, the electric motor is speed-controlled, when a corresponding torque output by the engine is insufficient, the electric motor tends to slow down the rotation speed, and in order to ensure that the operating rotation speed matches the target rotation speed, the electric motor adaptively outputs a positive torque; and when the torque is greater than the torque required for the operation, the electric motor tends to accelerate the rotation speed, in order to ensure that the operating rotation speed matches the target rotation speed, the electric motor adaptively outputs a negative torque, and during the whole process, the torque of the electric motor is adaptively adjusted.

Further, the torque of the engine is adjusted only when an operating rotation speed of the engine matches the target rotation speed of the engine, the rotation speed of the electric motor changes based on the target rotation speed during the rotation speed adjustment process, the torque of the engine maintains an original output torque, and any variation in the torque caused by load fluctuations is adaptively compensated by the electric motor.

The present disclosure further discloses a hybrid-power control system for implementing the above hybrid-power control method. The hybrid-power control system includes: an engine, an engine controller, an electric motor, an electric motor controller, a vehicle body controller, a pressure sensor, an operation handle, an accelerator, and an oil pump, wherein the engine and the electric motor are mechanically coupled to the oil pump, and drive the oil pump to operate in a hybrid manner; and the vehicle body controller is in electrical signal connection with the engine controller, the electric motor controller, the pressure sensor, the operation handle, the accelerator, and the power battery.

The present disclosure further discloses a crane with the above hybrid-power control system, and further, the crane is a wheeled crane.

Beneficial effects: Compared with the prior art, the present disclosure has the following advantages: (1) The engine is torque-controlled, the electric motor is rotation speed-controlled, and the characteristic of fast response speed of the electric motor is fully utilized to withstand the torque fluctuations and variations of the oil pump during the lifting operation of the crane, which improves the stability of the hybrid-power system, and avoids the lifting vibrations of the crane; (2) the torque and rotation speed required for the operation of the crane are obtained according to the information such as the opening degree of the handle, the opening degree of the accelerator, and the pressure of the system, and then an optimal output torque of the engine is comprehensively obtained according to the current electric quantity of the battery, such that the engine and the electric motor operate within the optimal economic interval, which improves the overall energy utilization efficiency of the hybrid power system and reduces the fuel consumption for the operation of the crane; and (3) the output torque of the engine changes only when the actual rotation speed and the target rotation speed of the engine are consistent with each other, which reduces the torque fluctuation of the engine during the lifting process and reduces the fuel consumption of the engine.

### BRIEF DESCRIPTION OF THE DRAWINGS

FIG. 1 is a framework diagram of a hybrid-power control system provided by the present disclosure.
FIG. 2 is a schematic diagram of a hybrid-power control system provided by the present disclosure.

### DETAILED DESCRIPTIONS OF THE EMBODIMENTS

The present disclosure will be further described in detail below with reference to accompanying drawings and specific embodiments.

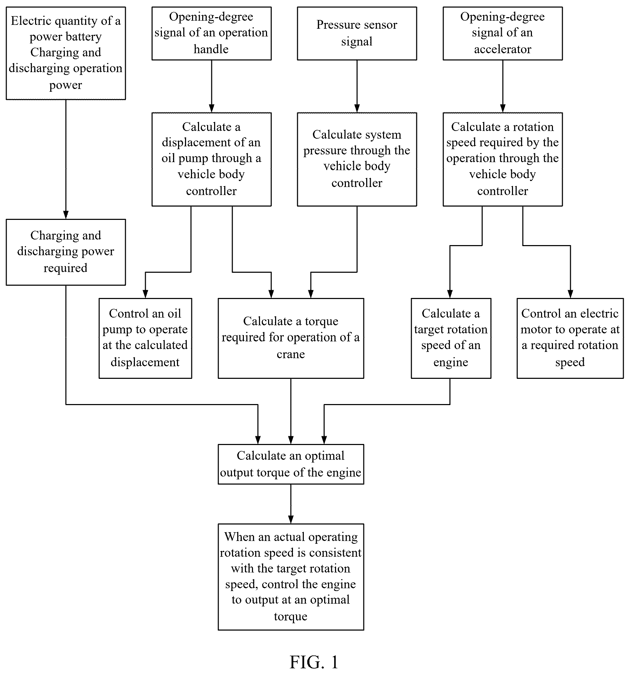

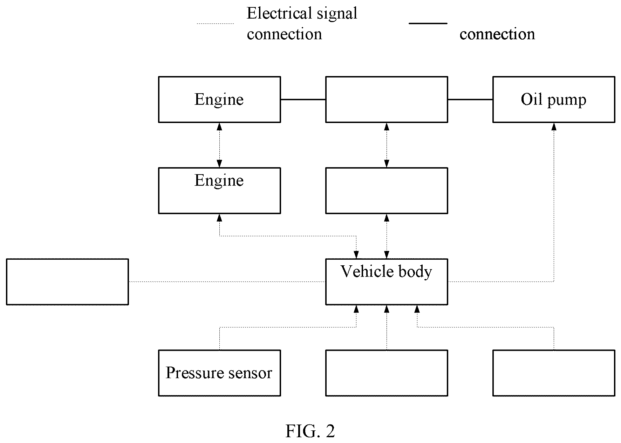

As shown in FIGs. 1-2, a hybrid-power control system of the present disclosure includes an engine, an engine controller, an electric motor, an electric motor controller, a vehicle body controller, a pressure sensor, an operation handle, an accelerator, and an oil pump. The engine and the electric motor are mechanically coupled to the oil pump, and drive the oil pump to operate in a hybrid manner, and the engine and the oil pump maintain a same rotation speed or a fixedly proportional rotation speed relative to the electric motor. The vehicle body controller is in electrical signal connection with the engine controller, the electric motor controller, the pressure sensor, the operation handle, the accelerator, and the power battery. Signals read by the vehicle body controller include a pressure signal of the pressure sensor, an opening-degree signal of the operation handle, an opening-degree signal of the accelerator, a rotation speed signal of the engine, a torque signal of the engine, a rotation speed signal of the electric motor, and a torque signal of the electric motor, which are used to control the output torque and rotation speed of the engine, the output torque and rotation speed of the electric motor, and an operating displacement of the oil pump. The vehicle body controller reads information of an electric quantity and charging and discharging operation power of the power battery, which is used to control the charging and discharging of the battery. The engine controller is configured to read status information of the engine and control the engine, and the electric motor controller is configured to read status information of the electric motor and control the electric motor.

During the hybrid-powered operation, the engine is torque-controlled, the electric motor is rotation speed-controlled, and a specific control process is as follows:
The vehicle body controller reads the opening-degree signal of the operation handle, calculates the displacement of the oil pump required for the operation of the crane, and sends a control signal to the oil pump, where the oil pump operates according to the corresponding displacement; and the vehicle body controller reads information of a pressure sensor at an oil outlet of the oil pump through the vehicle body controller to obtain a pressure of a hydraulic system, and by means of the displacement of the oil pump, calculating the torque required by the operation of the crane. The vehicle body controller reads the opening-degree signal of the accelerator through the vehicle body controller, and calculating a rotation speed required by the operation, so as to obtain a target rotation speed of the engine and a target rotation speed of the electric motor; and the electric motor controller controls the electric motor to output the target rotation speed, and since the oil pump and the engine are mechanically coupled to the electric motor, the engine and the oil pump follow the electric motor to operate at a certain speed.

The vehicle body controller reads information of a current electric quantity and charging and discharging operation power of the power battery, and charging and discharging power requirements of the power battery are output according to electric balance requirements of a vehicle. By means of integrating the torque required for the operation of the crane, the charging and discharging power required of the power battery, and the target rotation speed of the engine, an optimal torque actually output by the engine is calculated, such that the engine operates within an optimal economic interval. When a torque output by the engine is greater than the torque required for the operation, the electric motor outputs a negative torque to charge the power battery; and when the torque output by the engine is less than the torque required for the operation, the electric motor outputs a positive torque to discharge the power battery. Since the electric motor is speed-controlled, when a corresponding torque output by the engine is insufficient, the electric motor tends to slow down the rotation speed, and in order to ensure that the operating rotation speed matches the target rotation speed, the electric motor adaptively outputs a positive torque; and when the torque is greater than the torque required for the operation, the electric motor tends to accelerate the rotation speed, in order to ensure that the operating rotation speed matches the target rotation speed, the electric motor adaptively outputs a negative torque, and during the whole process, the torque of the electric motor is adaptively adjusted.

To avoid excessively fast fluctuations in the torque of the engine and solve problems such as slow response of the engine, the torque of the engine is adjusted only when an operating rotation speed of the engine matches the target rotation speed of the engine (within a certain threshold range), the rotation speed of the electric motor changes based on the target rotation speed during the rotation speed adjustment process, the torque of the engine maintains an original output torque, and any variation in the torque caused by load fluctuations is adaptively compensated by the electric motor.

The hybrid-power control method and system and the crane of the present disclosure calculate the torque and rotation speed required for the operation of the crane by constantly reading the information of an superstructure accelerator of the crane, the displacement of the oil pump, and the pressure of the system, and the engine outputs an optimal economic torque according to the current rotation speed; and the electric motor is rotation speed-controlled and constantly responds to the rotation speed requirements of the superstructure, and due to the characteristic of rapid response of the electric motor, output torque is adapted to the operation requirements, thereby improving the operation stability and economical efficiency of the hybrid power system. Products that balance stability, economical efficiency and environmental protection requirements can be created for crane users.

## Claims

1. A hybrid-power control method, comprising the following steps:
(1) reading an opening-degree signal of an operation handle through a vehicle body controller, calculating a displacement of an oil pump required by an operation, and sending a control signal to the oil pump, wherein the oil pump operates with the corresponding displacement;
(2) reading information of a pressure sensor at an oil outlet of the oil pump through the vehicle body controller to obtain a pressure of a hydraulic system, and by means of the displacement of the oil pump, calculating a torque required by an operation of a crane;
(3) reading an opening-degree signal of an accelerator through the vehicle body controller, and calculating a rotation speed required by the operation, so as to obtain a target rotation speed of an engine and a target rotation speed of an electric motor; controlling the electric motor to output the target rotation speed through an electric motor controller;
(4) reading information of an electric quantity and charging and discharging operation power of a power battery through the vehicle body controller, and outputting charging and discharging power requirements of the power battery according to electric balance requirements of a vehicle; and
(5) by means of integrating the torque required by the operation of the crane, the target rotation speed of the engine and the target rotation speed of the electric motor, and the charging and discharging power required of the power battery, calculating an optimal torque actually output by the engine, and adjusting the engine to operate within an optimal economic interval.

2. The hybrid-power control method according to claim **1,** wherein the oil pump and the engine are mechanically coupled to the electric motor, and the engine and the oil pump maintain a same rotation speed or a fixedly proportional rotation speed relative to the electric motor.

3. The hybrid-power control method according to claim **1,** wherein when a torque output by the engine is greater than the torque required for the operation, the electric motor outputs a negative torque to charge the power battery.

4. The hybrid-power control method according to claim **1,** wherein when the torque output by the engine is less than the torque required for the operation, the electric motor outputs a positive torque to discharge the power battery.

5. The hybrid-power control method according to claim **1,** wherein the electric motor is speed-controlled and the torque of the electric motor is adaptively adjusted.

6. The hybrid-power control method according to claim 1, wherein the torque of the engine is adjusted only when an operating rotation speed of the engine matches the target rotation speed of the engine, the rotation speed of the electric motor changes based on the target rotation speed during the rotation speed adjustment process, the torque of the engine maintains an original output torque, and any variation in the torque caused by load fluctuations is adaptively compensated by the electric motor.

7. A hybrid-power control system for implementing the hybrid-power control method according to any one of claims 1-6.

8. The hybrid-power control system according to claim 7, comprising: an engine, an engine controller, an electric motor, an electric motor controller, a vehicle body controller, a pressure sensor, an operation handle, an accelerator, and an oil pump, wherein the engine and the electric motor are mechanically coupled to the oil pump, and drive the oil pump to operate in a hybrid manner; and the vehicle body controller is in electrical signal connection with the engine controller, the electric motor controller, the pressure sensor, the operation handle, the accelerator, and the power battery.

9. A crane, comprising the hybrid-power control system according to claim 7 or 8.

10. The crane according to claim 9, wherein the crane is a wheeled crane.
